# FASCICULE DE BREVET EUROPEEN

(11) **EP 3 006 646 B1**
(45) Date de publication et mention de la délivrance du brevet: **14.11.2018**
(21) Numéro de dépôt: 15306559.4
(22) Date de dépôt: 05.10.2015
(51) Int. Cl.: E04F 15/024, E04F 15/02, A01G 9/033

(54) **SYSTÈME DE REVÊTEMENT DU TYPE DALLES SUR PLOTS COMPRENANT AU MOINS UN CONTENANT**
VERKLEIDUNGSSYSTEM VOM TYP PLATTEN AUF STELZLAGERN, DAS MINDESTENS EINEN BEHÄLTER UMFASST
TILE-ON-PAD COVERING SYSTEM COMPRISING AT LEAST ONE CONTAINER

(30) Priorité: 06.10.2014 FR 1459561
(43) Date de publication de la demande: 13.04.2016
(73) Titulaire: SOPREMA (Société par Actions Simplifiée), 67100 Strasbourg (FR)
(72) Inventeur: BINDSCHEDLER, Pierre-Etienne, 67000 STRASBOURG (FR); FULCRAND, Damien, 67380 LINGOLSHEIM (FR); LEVY, Jérôme, 67000 STRASBOURG (FR); SINDT, Lionel, 67210 OBERNAI (FR)
(74) Mandataire: Nuss, Laurent

(56) Documents cités:
- WO-A2-2006/102344
- JP-A- H06 294 203
- US-A1- 2014 202 078

## Description

La présente invention concerne le domaine des revêtements de sol, en particulier des revêtements de sol du type modulaire, comprenant des éléments individuels et séparés de revêtement portés par des éléments individuels et séparés de support, à distance de la surface (sol, dalle de béton, ancien revêtement, étanchéité) à recouvrir, le revêtement résultant étant circulable.

Plus particulièrement, le domaine d'application visé concerne les systèmes du type dénommé couramment "dalles sur plots".

L'un des avantages essentiels de ce type de revêtement modulaire est de permettre d'interchanger, et donc remplacer, individuellement chaque élément de revêtement, sans avoir à intervenir sur une quelconque autre composante du système (rénovation, modification de l'aspect esthétique).

Par ailleurs, la norme NFP 84-204-1-1 encore appelé DTU 43.1 confère à ce type de revêtement modulaire en dalles sur plots la fonction de protection lourde de l'étanchéité protégeant, lestant le revêtement d'étanchéité et autorisant ainsi la circulation sur les terrasses et toitures étanchées les rendant donc accessible aux individus.

Dans ce contexte, l'invention a pour objet un système de revêtement du type précité comprenant au moins un contenant en lieu et place d'au moins une dalle, ainsi qu'un contenant adapté pour un tel système.

Des systèmes de revêtement du type dalles sur plots sont déjà connus depuis de nombreuses années et sont notamment décrits dans les documents EP 0 441 728 et EP 0 259 237 (dalles reposant directement sur les plots) ou encore US 2005/028463 (dalles portées par une structure intermédiaire de cadres, supportée par des plots) ou dans le DTU 43.1 (norme NFP 84-204-1-1).

En outre, on connaît également des systèmes de végétalisation de toitures, dans lesquels des bacs de plantation modulaires avec des végétaux sont installés côte à côte sur la surface à recouvrir, soit en reposant directement sur ladite surface (voir par exemple EP 1 178 720, EP 2 508 063 et WO 2012/050529), soit en étant suspendus à une structure support (voir par exemple DE 2 645 230), ou encore en reposant sur une
couche de revêtement, qui est elle-même supportée par des plots ou analogue (voir par exemple WO 2010/040701).

Enfin, des systèmes de revêtement mixte, c'est-à-dire comprenant à la fois des dalles et des contenants végétalisés (ou utilisés à d'autres fins), font également partie de l'état de la technique.

Dans ces systèmes mixtes connus, les contenants sont soit totalement portés par les plots, en étant suspendus à ces derniers (voir par exemple DE 37 42 558), soit formés de deux parties, dont une est portée par les plots et dont l'autre repose au moins partiellement sur la surface à recouvrir (voir par exemple JP H 06 294203).

Néanmoins, les systèmes divulgués par ces deux documents sont de construction et de mise en oeuvre complexes, à savoir en plusieurs parties constitutives ou nécessitant des accessoires de montage.

Ainsi, le système divulgué par le document JP H06 294 203 précité, qui fait état des caractéristiques du préambule de la revendication 1, présente une structure complexe avec trois contenants différents disposés les uns dans les autres et requiert un réglage précis du positionnement de ses nombreuses composantes constitutives (portées et non portées) entre elles.

De plus, l'interchangeabilité entre les contenants et les dalles dans ces systèmes mixtes connus est limitée, voire problématique et nécessite généralement un réarrangement de l'environnement d'implantation du contenant, comme par exemple l'enlèvement des dalles voisines et/ou le déplacement, l'aménagement et/ou le remplacement des éléments support concernés.

Dans certains cas, il est même nécessaire de mettre en oeuvre des éléments supports spécifiques appariés aux contenants mis en oeuvre et formant ainsi un couple d'éléments indissociables (voir par exemple DE 37 42 558).

En outre, dans le cas de contenus du type substrat de plantation, environnement aquatique, et/ou cailloux, sable ou minéraux, éventuellement à surface circulable, le poids final du contenant rempli nécessite une structure renforcée, donc coûteuse, pour le contenant et ses moyens d'accrochage, voire le cas échéant pour les plots eux-mêmes.

La présente invention a notamment pour but de fournir une solution aux principales limitations exposées des systèmes connus évoqués précédemment, en proposant un système du type évoqué dans le préambule de la revendication 1, avec au moins un contenant creux, qui devrait être aisément substituable à une ou plusieurs dalles, être de structure simple, ne nécessiter aucun accessoire de montage, pouvoir recevoir un contenu de poids élevé, et ne nécessiter aucune opération de réglage ou d'ajustement particulière, même pour des surfaces à recouvrir ou des hauteurs de positionnement des dalles différentes. La solution proposée par l'invention devrait également permettre de fournir un appui amélioré sur le support et simultanément autoriser une libre circulation des liquides sur les surfaces à recouvrir.

Le but complexe précité est atteint par l'invention, pour un système selon le préambule de la revendication 1, grâce aux caractéristiques de la partie caractérisante de cette revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
les figures 1A et 1B sont des vues de dessus et en élévation latérale (partiellement démonté) d'une partie d'un système de revêtement de sol modulaire conforme à l'invention, comprenant un contenant selon l'invention ;
la figure 2 est une vue similaire à celle de la figure 1B, le contenant étant utilisé comme bac de végétabilisation et de plantation ;
les figures 3A et 3B sont des vues en perspective et en coupe transversale d'un ensemble formé d'un contenant, de ses quatre plots support et de sa coupelle sous-jacente, faisant partie du système de revêtement modulaire selon l'invention, tel que représenté par exemple sur les figures 1A et 1B, le contenant étant dans un état d'équilibre, c'est-à-dire suspendu sans autre charge que celle générée par son propre poids et sans contrainte aux quatre plots supports ;
les figures 4A et 4B sont des vues en coupe, respectivement en élévation latérale et en perspective, de l'ensemble représenté figures 3A et 3B, le contenant étant dans son état déployé, c'est-à-dire lorsqu'il est chargé du contenu (non représenté) qu'il est destiné à recevoir in situ (voir par exemple figure 2) ;
la figure 5 est une vue similaire à celle de la figure 4B, le contenant étant dans un état comprimé ou ramassé (par exemple pour le transport ou le stockage) ou lorsque les éléments supports ou plots sont de faible hauteur ou réglés à une faible hauteur ;
les figures 6A, 6B et 6C sont des vues respectivement de dessus, en perspective et en coupe transversale d'un contenant selon l'invention, à l'état d'équilibre (étirement sans contrainte du soufflet sous son propre poids et celui du fond) ;
les figures 7A et 7B sont des vues de dessus et en perspective d'une pièce formant plateau ou coupelle faisant partie de l'invention et déjà représentée sur les figures 1B et 2 à 5 ;
la figure 8 est une vue à une échelle différente du détail A de la figure 6A, montrant la structure d'un coin intérieur du contenant ;
la figure 9 est une vue à une échelle différente du détail B de la figure 4B, montrant l'emboîtement entre le fond du contenant et la coupelle sous-jacente, et,
la figure 10 est une vue à une autre échelle du détail C de la figure 3B, montrant le surmoulage du cadre avec le matériau formant le corps creux du contenant.

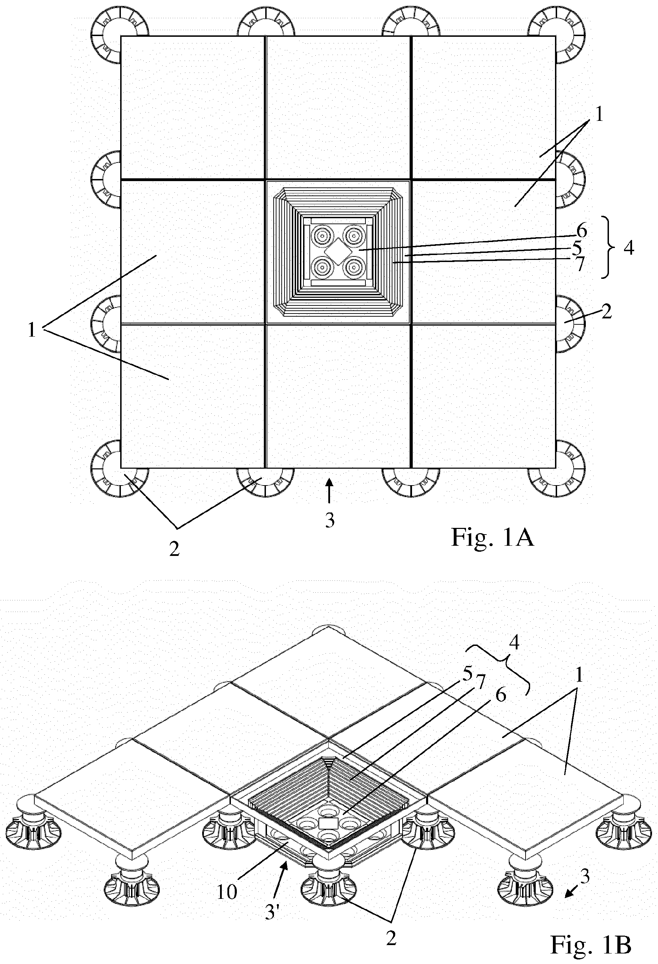

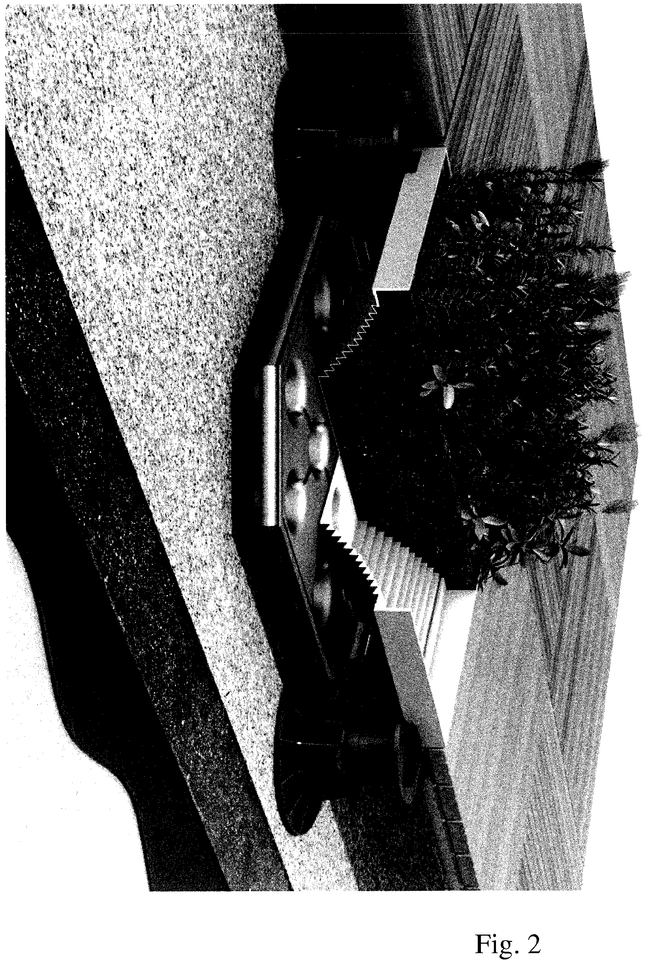

Les figures 1 et 2 illustrent une partie d'un système de revêtement de sol modulaire et circulable du type dalles 1 sur plots 2, comprenant une pluralité d'éléments de couverture sous forme de dalles ou de plaques analogues 1 carrées ou rectangulaires présentant une épaisseur ou hauteur déterminée (préférentiellement une épaisseur identique pour la totalité du sol modulaire constitué) et une pluralité d'éléments support sous forme de plots ou analogues 2, préférentiellement réglables en hauteur et disposés sur une surface d'appui 3 à revêtir, chaque dalle 1 reposant directement, de manière courante, sur quatre plots 2 au niveau de ses quatre coins, ce avec faculté d'enlèvement individuel de chaque plaque ou dalle 1, sans intervention au niveau des éléments support 2, ni préférentiellement au niveau des dalles voisines.

Le système comprend également, intégré(s) en lieu et place d'une ou de plusieurs dalle(s) 1, un ou plusieurs contenant(s) 4 du type bac, se présentant chacun sous la forme d'un corps creux, ouvert vers le haut, et délimitant un volume de rétention entre les plots 2.

Conformément à l'invention, le corps creux de chaque contenant 4 du type bac comprend, d'une part, un cadre rigide 5, dont les dimensions périphériques extérieures sont sensiblement identiques à ou multiple de celles d'une dalle 1 et qui repose au moins au niveau de ses coins 5' sur les plots 2 concernés, d'autre part, un fond 6 sensiblement rigide et destiné à venir reposer directement ou indirectement sur la surface d'appui 3 et, enfin, une structure en soufflet 7 élastiquement déformable (déformation réversible), reliant le cadre 5 au fond 6 et formant les parois latérales 4' du corps creux 4, le fond 6 présentant avantageusement des dimensions inférieures à la zone libre 3' de la surface d'appui 3 située entre les plots 2 supportant le contenant 4 considéré.

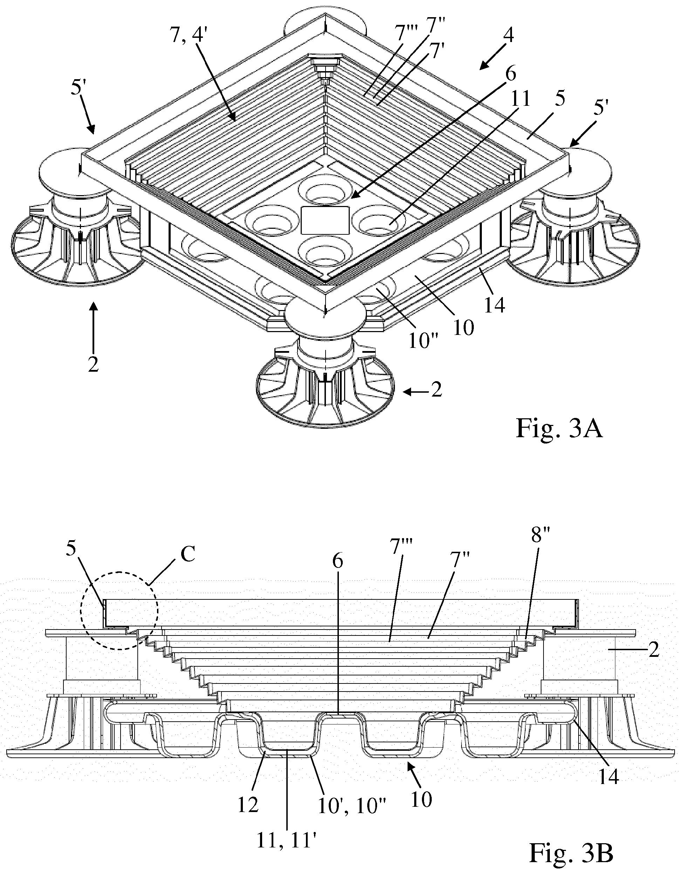

Comme le montrent plus précisément les figures 3 à 6, chaque contenant 4 comprend ainsi une première partie rigide supérieure, le cadre 5, interagissant avec les plots 2 (positionnement et maintien) et délimitant l'ouverture du contenant 4, une seconde partie inférieure, le fond 6, interagissant avec la surface d'appui à recouvrir 3 et formant le bas du contenant 4 et une troisième partie intermédiaire déformable, la structure en soufflet ou en accordéon 7, reliant lesdites première et deuxième parties 5 et 6, définissant le volume variable du contenant 4, permettant une adaptation dudit contenant 4 à des hauteurs de positionnement des dalles 1 variables (résultant de hauteurs variables des éléments supports 2), voire en dévers, et fournissant des parois 4', préférentiellement étanches, de contention du contenu.

Chaque contenant 4 avec ses trois parties constitutives 5, 6 et 7 est avantageusement réalisé en tant que pièce d'un seul tenant intégrant lesdites parties. Une telle pièce monobloc peut, par exemple, être obtenue par moulage par injection d'un matériau thermoplastique présentant des caractéristiques adaptées à l'application visée, ou par thermoformage d'une feuille d'un tel matériau.

Le cadre 5 formant la partie du contenant 4 située dans le même plan que les dalles 1 polygonales, généralement carrées ou rectangulaires, présente une forme et des dimensions extérieures (notamment au niveau du cadre supérieur 5 affleurant) identiques à celle d'une dalle 1 ou d'un groupe de dalles 1 (alignement ou autre regroupement). Il autorise donc une mise en place et un enlèvement du contenant 4 à l'instar d'une dalle 1 ou d'un groupe de dalles 1.

Selon une première caractéristique de l'invention, permettant d'éviter d'interférer avec les parties inférieures des plots supports 2, le fond 6 de chaque contenant présente une forme carrée ou rectangulaire de plus petite dimension que le cadre 5 et les parois latérales 4' formant la structure en soufflet déformable 7 convergent en s'effilant vers ce fond 6.

En accord avec un mode de réalisation avantageux ressortant des figures 3 à 6, et afin d'autoriser une grande amplitude de déformation du contenant 4, sans compromettre son intégrité, et tout en maintenant une forme déterminée, la structure en soufflet 7 est constituée de bandes de matériau 7', 7" reliées entre elles par des charnières films 7"' et forme avec le fond 6 une partie d'un seul tenant du corps creux 4' correspondant à une pyramide à gradins inversée, creuse et ouverte à sa base, obtenue par exemple par moulage par injection ou par thermoformage de matériau thermoplastique.

Par charnière film, on entend dans la présente des zones linéaires de pliage préférentiel, formées (par amincissement et/ou conformation) dans le même matériau que les bandes 7' et 7" qu'elles relient entre elles et d'un seul tenant avec elles, chaque paire de bandes 7 et 7' formant un gradin et la charnière film 7"' les reliant formant le nez dudit gradin. Les charnières films relient également les gradins entre eux. Ces charnières film 7'" forment alternativement une arête de nez et une arête de fond pour la structure en soufflet 7.

En vue d'absorber sans contrainte excessive les modifications de forme et de configuration résultant des différents états de repliement/déploiement du contenant 4 (comparaison des états du contenant 4 ressortant des figures 3 à 5), il y a lieu de prévoir des dispositions constructives particulières, préférentiellement intégrées au niveau des régions des coins ou angles de la structure en soufflet 7.

A ce sujet, et en relation avec une première variante constructive de l'invention, ressortant des figures 3 à 6 et 8, il est avantageusement prévu que, à l'état d'équilibre en suspension de la structure en soufflet 7 et en l'absence de contrainte, l'angle α entre deux bandes de matériau 7', 7" adjacentes et reliées par une charnière film 7"', en fond de gradin et du côté intérieur du corps creux 4', soit inférieur à 90°, ledit angle α diminuant en cas de repliement ou d'aplatissement de la structure en soufflet 7 et augmentant en cas d'extension ou d'allongement de ladite structure en soufflet 7, éventuellement au-delà de 90°.

Selon une seconde variante constructive de l'invention, illustré par les mêmes figures, il peut être prévu que les bandes de matériau 7" formant une face d'un même gradin, orientée sensiblement perpendiculairement au plan du cadre 5 à l'état déployé de la structure en soufflet 7, soient reliées entre elles, au niveau des coins intérieurs, par des portions de jonction 8 arrondies et en ce que les bandes de matériau 7' formant une même face d'un gradin, orientée sensiblement parallèlement au plan du cadre 5 à l'état déployé de la structure en soufflet 7, sont reliées entre elles, au niveau des coins intérieurs, par des plis 8', autorisant la formation de réserves de matière à l'état replié de la structure en soufflet 7.

En raison de considérations d'espace libre disponible notamment, les deux variantes constructives précitées peuvent être mises en oeuvre sur une même structure 7, pour s'accommoder de l'encombrement des plots 2 supportant le contenant 4 considéré.

Ainsi, selon une variante préférée, les portions de jonction arrondies 8 et les plis 8' sont présents en partie inférieure ou centrale de la structure en soufflet 7 et les portions de jonction en biseaux 8" sont présentes en partie supérieure ou en région périphérique extérieure de la structure en soufflet 7, attenante au cadre 5, de manière à former sur le côté extérieur du corps creux des dégagements 9 au niveau des coins.

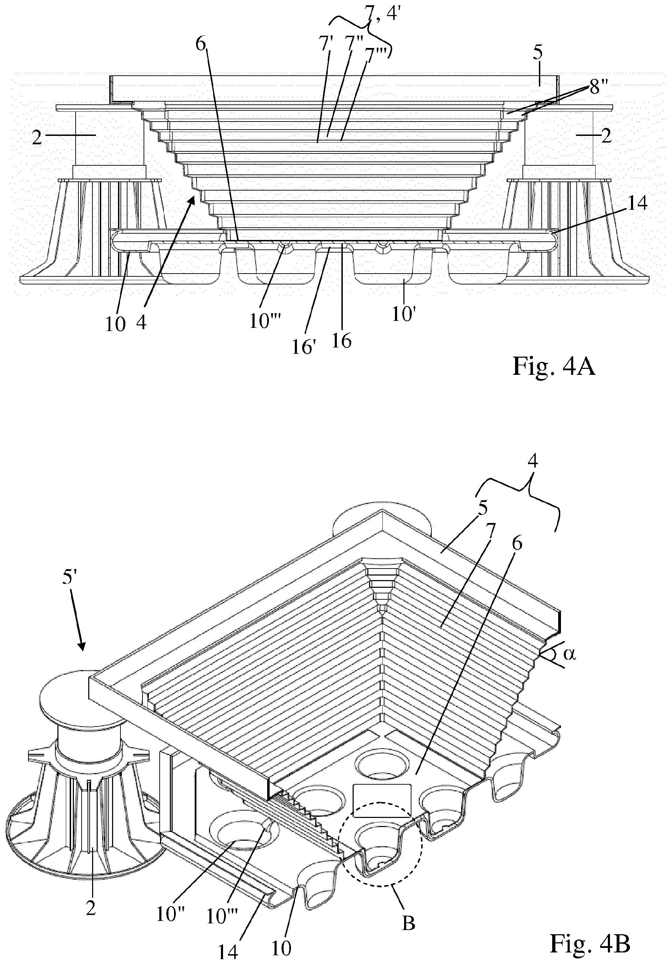

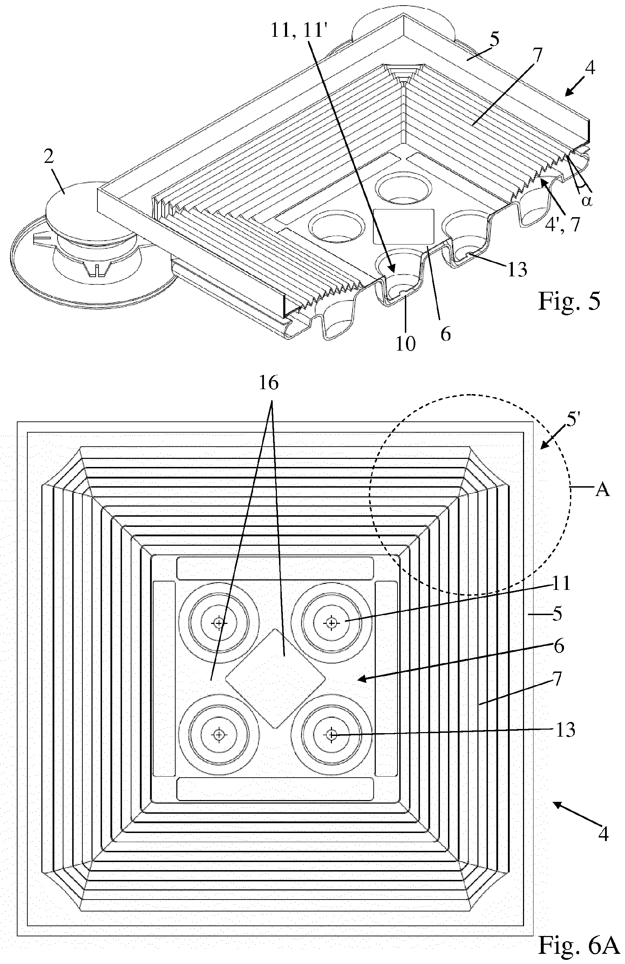

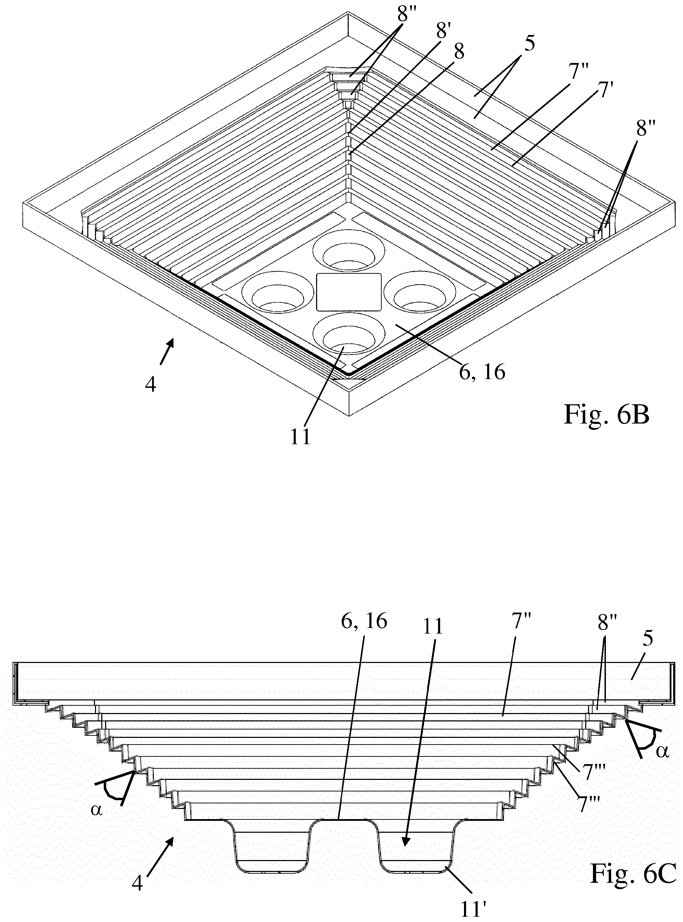

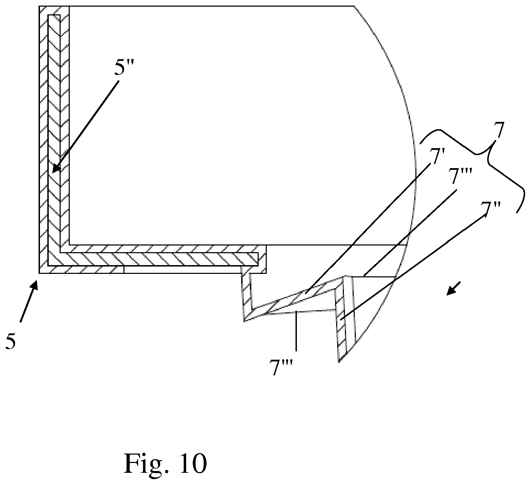

En accord avec une réalisation pratique avantageuse ressortant plus particulièrement de la figure 10, mais également des figures 4A et 6C, le cadre 5 de chaque contenant 4 comprend une armature 5" (métallique ou non et préférentiellement à section en L) surmoulée avec un matériau synthétique ou polymère, tel que par exemple une membrane en un matériau thermoplastique, notamment en oléfine thermoplastique, ledit matériau constituant également d'un seul tenant la structure en soufflet 7 et le fond 6 du contenant 4 considéré.

L'armature 5" pourra être métallique, ou consister en un autre matériau avec une rigidité plus élevée que celle du matériau formant les
autres parties 4, 5, 6 et une résistance mécanique adéquate. A titre d'exemples, on peut envisager des matériaux polymères chargés ou non de renfort sous forme de fibres courtes (verre, chanvre, carbone, etc), ou des matériaux composites thermoplastiques ou thermodurcissables (matrice polymère avec renforts sous forme de fibres longues tressées ou non).

Lorsque les différentes parties 5, 6 et 7 du contenant 4 sont réalisées d'un seul tenant par moulage, ladite armature 5" pourra être disposée dans le moule et être surmoulée.

Préférentiellement, la hauteur du cadre 5 du ou de chaque contenant 4 est au plus identique à la hauteur ou à l'épaisseur des dalles 1 voisines du contenant 4 concerné, préférentiellement inférieure à cette hauteur ou épaisseur.

La paroi verticale extérieure du cadre 5 à section en L permet de constituer une partie supérieure de contenant avec des dimensions latérales maximales compte tenu de l'espace disponible.

La paroi horizontale du cadre 5 à section en L permet de déporter l'extrémité supérieure de la structure 7 à distance des plots 2.

Le contenant 4 peut être avantageusement réalisé en une seule opération par thermoformage d'une feuille ou plaque de matériau thermoplastique dans un moule, le renfort métallique 5" y ayant été positionné préalablement pour être au moins partiellement recouvert par ledit matériau.

Les caractéristiques mécaniques particulières du fond 6 et de la structure en soufflet 7 découlent ainsi des déformations sous pression réalisées au niveau des zones correspondantes de la plaque de matériau initiale préalablement chauffée.

Le fond 6 est avantageusement pourvu de moyens d'appui 11' reprenant en grande partie le poids du contenu placé dans le contenant 4.

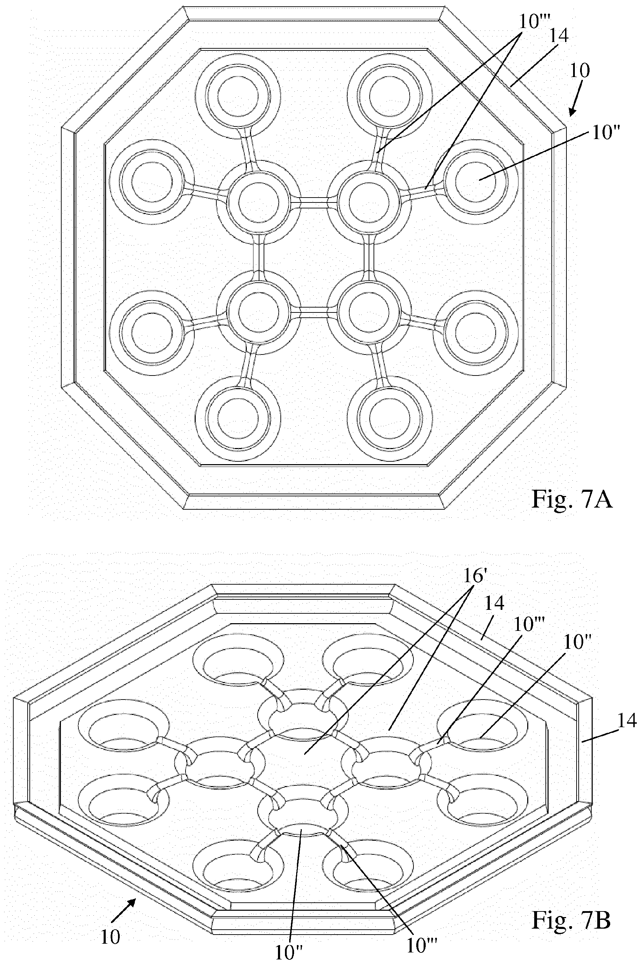

En accord avec l'invention, à chaque contenant 4 de type bac est associé une pièce séparée 10 en forme de plateau ou de coupelle, reposant sur la surface d'appui 3 entre les plots 2 supportant le contenant 4 considéré et disposé sous le fond 6 dudit contenant 4, c'est-à-dire entre ce dernier et la surface d'appui 3 (voir figures 1B, 3, 4, 7 et 9).

Dans ce cas, le fond 6 du ou des contenant(s) 4 repose, à l'état déployé ou chargé, sur la surface d'appui 3 à travers la pièce 10 en forme de plateau ou de coupelle qui lui est associée et dans laquelle elle est reçue préférentiellement avec emboitement et/ou coopération de formes 10", 11' respectivement conjuguées.

La pièce 10 sert ainsi de moyen de support intermédiaire, pouvant permettre une répartition plus optimisée du poids, une configuration d'appui différente de celle du fond 6 et/ou des fonctions hydrauliques améliorées.

Egalement en accord avec l'invention et en vue de fournir un appui stable en présence d'inégalités, tout en autorisant simultanément une libre circulation des liquides entre la pièce 10 et la surface 3, chaque pièce 10 en forme de plateau ou de coupelle présente en sous-face des projections 10', préférentiellement constituées par des déformations locales de la paroi de ladite pièce 10, aptes et destinées à faire reposer ladite pièce 10 en forme de plateau ou de coupelle de manière discontinue, préférentiellement avec des zones d'appui locales espacées, sur la surface d'appui 3 (libre circulation d'eau entre la pièce 10 et la surface d'appui 3).

En vue de fournir des possibilités de rétention d'eau importantes, tout en couplant mécaniquement le fond 6 et la pièce 10, éventuellement avec un jeu, le fond 6 de chaque contenant 4 peut présenter, du côté intérieur, des régions renfoncées 11 formant réservoirs de liquide, et, du côté extérieur, des formations protubérantes 11', aptes et destinées à s'emboiter au moins partiellement dans des sites renfoncés complémentaires 10" de la pièce 10 en forme de plateau ou de coupelle associée au contenant 4 considéré.

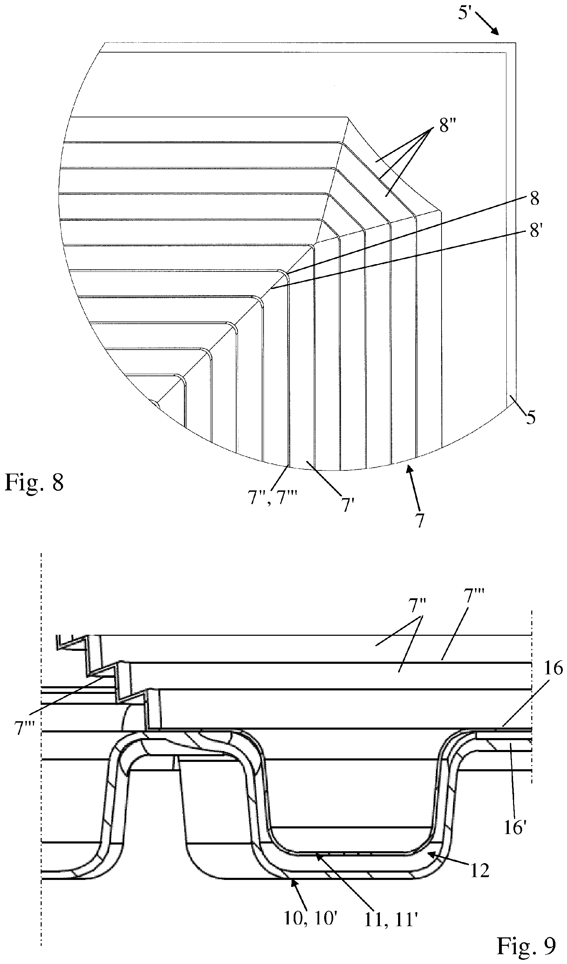

Pour former une seconde réserve d'eau, extérieure au contenant 4, autoriser un léger ajustement transversal entre le fond 6 et le plateau 10 et garantir une bonne reprise d'effort en termes d'appui, il peut-être prévu que les sites renfoncés 10" de la pièce 10 en forme de plateau ou de coupelle présentent des dimensions intérieures supérieures aux dimensions extérieures des formations protubérantes 11' du fond 6, de manière à constituer, un interstice 12 entre ces formations 11' et ces sites 10" mutuellement emboîtés, la paroi du fond 6 reposant sur la paroi de la pièce 10 au niveau de portions de parois planes 16, 16' (respectivement du fond 6 et de la pièce 10) s'étendant entre ces formations 11' et ces sites 10" (Figures 3B et 9).

En relation avec le procédé de fabrication préféré précité, les régions renfoncées 11 et les formations protubérantes 11' correspondent à des zones déformées identiques de la paroi du fond 6 de chaque contenant 4 réalisées par thermoformage, lesdites régions renfoncées 11 formant des réservoirs de liquide du fond 6 du contenant 4 comportant chacun au moins un orifice d'évacuation 13. Ces déformations de la paroi du fond 6 confèrent en outre une rigidité renforcée à celle-ci (par rapport à une paroi plane).

En accord avec une caractéristique supplémentaire; et comme le montrent les figures 3, 4 et 7, chaque pièce 10 en forme de plateau ou de coupelle présente une extension surfacique plus importante que le fond 6 du contenant 4 auquel elle est associée, et comporte un bord périphérique 14 relevé et replié vers l'intérieur et des renfoncements 10" formant réservoirs de liquide, correspondant aux projections protubérantes 10' en sous-face formant piètements et dont certains au moins reçoivent par emboitement des formations protubérantes 11' du fond 6 du contenant 4 associé, lesdits renfoncements 10" étant avantageusement reliés entre eux par des canaux 10"' de déversement de trop plein, sous forme de rainure en creux formée dans les portions planes 16' s'étendant entre les réservoirs 10". Ces rainures 10"' permettent aussi de garantir une circulation libre ou facile des liquides entre les différents réservoirs 10", en particulier ceux recevant les régions renfoncées 11 formant réservoirs dans le fond 6, lorsque le contenant 4 est en appui sous pression sur la pièce 10, au niveau des portions planes 16, 16'.

Enfin, selon une autre caractéristique, ne ressortant pas des figures annexées, chaque contenant 4 peut comprendre un moyen de diffusion ou d'aspersion de liquide, relié à un conduit ou un réseau de distribution s'étendant sous les dalles 1 ou analogues.

Bien entendu, le système de revêtement selon l'invention peut intégrer un ou plusieurs contenants 4, agrémentés éventuellement de contenus différents, regroupés ou dispersés dans le système, ledit revêtement pouvant en outre évoluer avec le temps et selon les souhaits de l'utilisateur (en termes de disposition et de répartition des dalles 1 et des contenants 4 par exemple).

L'invention concerne également un contenant 4 du type bac ou analogue, en particulier adapté pour la culture de plantes en milieu extérieur, et apte et destiné à être intégré dans un revêtement de sol du type dalles sur plots, en particulier installé sur une toiture circulable, ce contenant consistant en un contenant 4 tel que décrit précédemment.

Préférentiellement, le cadre ou bord périphérique supérieur 5 présente une épaisseur au plus sensiblement équivalente à celle des bords des dalles 1 reposant sur les plots 2, ledit cadre ou bord périphérique 5 étant éventuellement adapté pour l'installation d'un cache ou d'un élément décoratif analogue.

Il peut en outre, éventuellement comporter, sur au moins deux côtés opposés du cadre supérieur 5, des sites de préhension ou d'accrochage.

Dans la structure à soufflet 7 reliant le cadre 5 et le fond 6, les bandes de matériau 7', 7" formant une même face d'un gradin sont reliées entre elles, au niveau des coins intérieurs, par des portions de jonction 8" inclinées, formant des biseaux.

Selon une autre caractéristique de l'invention, il peut être prévu qu'au moins le fond 6 du ou de chaque contenant 4 et/ou la pièce formant plateau ou coupelle 10 associée, comporte(nt) un revêtement formant une barrière à la progression des racines, en face intérieure ou extérieure ou au niveau d'éventuels orifices 13 d'évacuation de liquide. Bien entendu, l'invention n'est pas limitée au mode de réalisation décrit et représenté aux dessins annexés.

Des modifications restent possibles, notamment du point de vue de la constitution des divers éléments ou par substitution d'équivalents techniques, sans sortir pour autant du domaine de protection de 1 invention telle que définie par les revendications.

## Revendications

1. Système de revêtement de sol modulaire et circulable du type dalles (1) sur plots (2), comprenant une pluralité d'éléments de couverture sous forme de dalles ou de plaques analogues (1) carrées ou rectangulaires présentant une certaine épaisseur et une pluralité d'éléments support sous forme de plots ou analogues (2), préférentiellement réglables en hauteur et disposés sur une surface d'appui (3) à revêtir, chaque dalle (1) reposant directement, de manière courante, sur quatre plots (2) au niveau de ses quatre coins, ce avec faculté d'enlèvement individuel de chaque plaque ou dalle (1), sans intervention au niveau des éléments support (2),
ledit système comprenant également, intégré(s) en lieu et place d'une ou de plusieurs dalle(s) (1), un ou plusieurs contenant(s) (4) du type bac, se présentant chacun sous la forme d'un corps creux, ouvert vers le haut et délimitant un volume de rétention entre les plots (2),
le corps creux (4') de chaque contenant (4) du type bac comprenant, d'une part, un cadre rigide (5), dont les dimensions périphériques extérieures sont sensiblement identiques à ou multiple de celles d'une dalle (1) et qui repose au moins au niveau de ses coins (5') sur les plots (2) concernés, et, d'autre part, un fond sensiblement rigide et destiné à venir reposer directement ou indirectement sur la surface d'appui (3)
système **caractérisé**
**en ce que** le corps creux de chaque contenant (4) comprend également une structure en soufflet (7) élastiquement déformable, reliant le cadre (5) au fond (6) et formant les parois latérales (4') du corps creux (4), le fond (6) présentant avantageusement des dimensions inférieures à la zone libre (3') de la surface d'appui (3) située entre les plots (2) supportant le contenant (4) considéré,
**en ce qu'**à chaque contenant (4) de type bac est associé une pièce séparée (10) en forme de plateau ou de coupelle, reposant sur la surface d'appui (3) entre les plots (2) supportant le contenant (4) considéré et disposé sous le fond (6) dudit contenant (4), et
**en ce que** chaque pièce (10) en forme de plateau ou de coupelle présente en sous-face des projections (10'), préférentiellement constituées par des déformations locales de la paroi de ladite pièce (10), aptes et destinées à faire reposer ladite pièce (10) en forme de plateau ou de coupelle de manière discontinue, préférentiellement avec des zones d'appui locales espacées, sur la surface d'appui (3).

2. Système selon la revendication 1, **caractérisé en ce que** le fond (6) de chaque contenant présente une forme carrée ou rectangulaire de plus petite dimension que le cadre (5) et **en ce que** les parois latérales (4') formant la structure en soufflet déformable (7) convergent en s'effilant vers ce fond (6).

3. Système selon l'une quelconque des revendications 1 et 2, **caractérisé en ce que** la structure en soufflet (7) est constituée de bandes de matériau (7', 7") reliées entre elles par des charnières films (7"') et forme avec le fond (6) une partie d'un seul tenant du corps creux (4') correspondant à une pyramide à gradins inversée, creuse et ouverte à sa base, obtenue par exemple par moulage par injection ou par thermoformage de matériau thermoplastique.

4. Système selon la revendication 3, **caractérisé en ce que**, à l'état d'équilibre en suspension de la structure en soufflet (7) et en l'absence de contrainte, l'angle (α) entre deux bandes de matériau (7', 7") adjacentes et reliées par une charnière film (7"'), en fond de gradin et du côté intérieur du corps creux (4'), est inférieur à 90°, ledit angle (α) diminuant en cas de repliement ou d'aplatissement de la structure en soufflet (7) et augmentant en cas d'extension ou d'allongement de ladite structure en soufflet (7), éventuellement au-delà de 90°.

5. Système selon la revendication 3 ou 4, **caractérisé en ce que** les bandes de matériau (7") formant une face d'un même gradin, orientée sensiblement perpendiculairement au plan du cadre (5) à l'état déployé de la structure en soufflet (7), sont reliées entre elles, au niveau des coins intérieurs, par des portions de jonction (8) arrondies et **en ce que** les bandes de matériau (7') formant une même face d'un gradin, orientée sensiblement parallèlement au plan du cadre (5) à l'état déployé de la structure en soufflet (7), sont reliées entre elles, au niveau des coins intérieurs, par des plis (8'), autorisant la formation de réserves de matière à l'état replié de la structure en soufflet (7).

6. Système selon la revendication 3 ou 4, **caractérisé en ce que** les bandes de matériau (7', 7") formant une même face d'un gradin sont reliées entre elles, au niveau des coins intérieurs, par des portions de jonction (8") inclinées, formant des biseaux.

7. Système selon les revendications 5 et 6, **caractérisé en ce que** les portions de jonction arrondies (8) et les plis (8') sont présents en partie inférieure ou centrale de la structure en soufflet (7) et **en ce que** les portions de jonction en biseaux (8") sont présentes en partie supérieure ou en région périphérique extérieure de la structure en soufflet (7), attenante au cadre (5), de manière à former sur le côté extérieur du corps creux des dégagements (9) au niveau des coins.

8. Système selon l'une quelconque des revendications 1 à 7, **caractérisé en ce que** le cadre (5) de chaque contenant (4) comprend une armature (5"), métallique ou non, surmoulée avec un matériau synthétique ou polymère, tel que par exemple une membrane en un matériau thermoplastique, notamment en oléfine thermoplastique, ledit matériau constituant également d'un seul tenant la structure en soufflet (7) et le fond (6) du contenant (4) considéré.

9. Système selon l'une quelconque des revendications 1 à 8, **caractérisé en ce que** la hauteur du cadre (5) du ou de chaque contenant (4) est au plus identique à la hauteur ou à l'épaisseur des dalles (1) voisines du contenant (4) concerné, préférentiellement inférieure à cette hauteur ou épaisseur, ledit cadre étant éventuellement adapté pour l'installation d'un cache ou d'un élément décoratif analogue.

10. Système selon l'une quelconque des revendications 1 à 9, **caractérisé en ce que** le fond (6) du ou des contenant(s) chargé(s) repose sur la surface d'appui (3) à travers la pièce (10) en forme de plateau ou de coupelle qui lui est associée et dans laquelle elle est reçue préférentiellement avec emboitement et/ou coopération de formes (10", 11') respectivement conjuguées.

11. Système selon l'une quelconque des revendications 1 à 10, **caractérisé en ce que** le fond (6) de chaque contenant (4) présente, du côté intérieur, des régions renfoncées (11) formant réservoirs de liquide, et, du côté extérieur, des formations protubérantes (11'), aptes et destinées à s'emboiter au moins partiellement dans des sites renfoncés complémentaires (10") de la pièce (10) en forme de plateau ou de coupelle associée au contenant (4) considéré.

12. Système selon les revendications 10 et 11, **caractérisé en ce que** les sites renfoncés (10") de la pièce (10) en forme de plateau ou de coupelle présentent des dimensions intérieures supérieures aux dimensions extérieures des formations protubérantes (11') du fond (6), de manière à constituer, un interstice (12) entre ces formations (11') et ces sites (10") mutuellement emboîtés, la paroi du fond (6) reposant sur la paroi de la pièce (10) au niveau de portions de parois planes (16, 16') s'étendant entre ces formations (11') et ces sites (10").

13. Système selon la revendication 11, **caractérisé en ce que** les régions renfoncées (11) et les formations protubérantes (11') correspondent à des zones déformées identiques de la paroi du fond (6) de chaque contenant (4) réalisées par thermoformage, lesdites régions renfoncées (11) formant des réservoirs de liquide du fond (6) du contenant (4) comportant chacun au moins un orifice d'évacuation (13).

14. Système selon l'une quelconque des revendications 1 à 13, **caractérisé en ce que** chaque pièce (10) en forme de plateau ou de coupelle présente une extension surfacique plus importante que le fond (6) du contenant (4) auquel elle est associée, et comporte un bord périphérique (14) relevé et replié vers l'intérieur et des renfoncements (10") formant réservoirs de liquide, correspondant à des projections protubérantes (10') en sous-face formant piètements et dont certains au moins reçoivent par emboitement des formations protubérantes (11') du fond (6) du contenant (4) associé, lesdits renfoncements (10") étant avantageusement reliés entre eux par des canaux (10"') de déversement de trop plein.

15. Système selon l'une quelconque des revendications 1 à 14, **caractérisé en ce qu'**au moins le fond (6) du ou de chaque contenant (4) et/ou la pièce formant plateau ou coupelle (10) associée, comporte(nt) un revêtement formant une barrière à la progression des racines, en face intérieure ou extérieure ou au niveau d'éventuels orifices (13) d'évacuation de liquide.

16. Système selon l'une quelconque des revendications 1 à 15, **caractérisé en ce que** chaque contenant (4) comprend un moyen de diffusion ou d'aspersion de liquide, relié à un conduit ou un réseau de distribution s'étendant sous les dalles (1) ou analogues.

17. Système selon l'une quelconque des revendications 1 à 16, **caractérisé en ce que** chaque contenant (4) comporte, sur au moins deux côtés opposés du cadre supérieur (5), des sites de préhension ou d'accrochage.

18. Système selon l'une quelconque des revendications 1 à 17, **caractérisé en ce que** le cadre (5), le fond (6) et la structure en soufflet (7) de chaque contenant (4) consiste en une pièce d'un seul tenant ou monobloc.

## Patentansprüche

1. Modulares und unterlüftbares Bodenbelagsystem vom Typ Fliesen (1) auf Klötzen (2), das eine Vielzahl von Abdeckelementen in Form quadratischer oder rechteckiger Fliesen oder ähnlicher Platten (1), die eine bestimmte Dicke haben, und eine Vielzahl von Tragelementen in Form von Klötzen oder ähnlichem (2) aufweist, die vorzugsweise höhenverstellbar und auf einer zu belegenden Auflagefläche (3) angeordnet sind, wobei jede Fliese (1) üblicherweise an ihren vier Ecken direkt auf vier Klötzen (2) aufliegt, und wobei die Möglichkeit der Einzelentnahme jeder Platte oder Fliese (1) ohne Einwirkung auf die Tragelemente (2) gegeben ist,
wobei das System anstelle einer oder mehrerer Fliese(n) (1) ferner einen oder mehrere eingegliederte(n) Behälter (4) des Typs Wanne umfasst, von denen jeder die Form eines Vertiefungskörpers aufweist, nach oben hin offen ist und ein Rückhaltevolumen zwischen den Klötzen (2) begrenzt,
wobei der Vertiefungskörper (4') jedes Behälters (4) des Typs Wanne einerseits einen starren Rahmen (5) umfasst, dessen Außenumfangsabmessungen im Wesentlichen mit denen einer Fliese (1) oder einem Vielfachen davon identisch sind und der zumindest an seinen Ecken (5') auf den betreffenden Klötzen (2) aufliegt, und andererseits einen im Wesentlichen starren Boden umfasst, der dafür vorgesehen ist, direkt oder indirekt auf der Auflagefläche (3) aufzuliegen,
**dadurch gekennzeichnet,**
**dass** der Vertiefungskörper jedes Behälters (4) ferner eine den Rahmen (5) mit dem Boden (6) verbindende und Seitenwände (4') des Vertiefungskörpers (4) ausbildende elastisch verformbare Balgstruktur (7) umfasst, wobei der Boden (6) vorteilhafterweise kleinere Abmessungen als die Freizone (3') der Auflagefläche (3), die sich zwischen den den betreffenden Behälter (4) tragenden Klötzen (2) befindet, aufweist,
**dass** jedem Behälter (4) des Typs Wanne ein separates Bauteil (10) in Form einer Schale oder eines Schälchens zugeordnet ist, das auf der Auflagefläche (3) zwischen den den betreffenden Behälter (4) tragenden Klötzen (2) aufliegt und unter dem Boden (6) des Behälters (4) angeordnet ist, und
**dass** jedes Bauteil (10) in Form einer Schale oder eines Schälchens auf der Unterseite Vorsprünge (10') aufweist, die vorzugsweise durch lokale Verformungen der Wand des Bauteils (10) ausgebildet sind, und die dafür geeignet und dafür vorgesehen sind, das Bauteil (10) in Form einer Schale oder eines Schälchens in diskontinuierlicher Weise, vorzugsweise mit voneinander beabstandeten lokalen Auflagezonen, auf der Auflagefläche (3) aufliegen zu lassen.

2. System nach Anspruch 1, **dadurch gekennzeichnet, dass** der Boden (6) jedes Behälters eine quadratische oder rechteckige Form, die kleiner als der Rahmen (5) ist, aufweist, und dass die die verformbare Balgstruktur (7) ausbildenden Seitenwände (4') zum Boden (6) hin verjüngend zusammenlaufen.

3. System nach einem der Ansprüche 1 oder 2, **dadurch gekennzeichnet, dass** die Balgstruktur (7) aus durch mit Filmscharnieren (7''') miteinander verbundenen Materialbahnen (7', 7'') ausgebildet ist und mit dem Boden (6) einen einstückig ausgebildeten Abschnitt des Vertiefungskörpers (4') ausbildet, der einer invers gestuften, hohlen und an ihrem Sockel geöffneten Pyramide entspricht, die beispielsweise durch Spritzgießen oder durch Thermoformung thermoplastischen Materials erhalten wurde.

4. System nach Anspruch 3, **dadurch gekennzeichnet, dass** im Aufhängungsgleichgewichtszustand der Balgstruktur (7) und bei Abwesenheit von mechanischer Spannung der Winkel (α) zwischen zwei benachbarten und über ein Filmscharnier (7''') miteinander verbundenen Materialbahnen (7', 7'') am Boden der Stufe und auf der Innenseite des Vertiefungskörpers (4') kleiner als 90° ist, wobei der Winkel (α) bei Faltung oder Abplattung der Balgstruktur (7) abnimmt und bei Ausdehnung oder Verlängerung der Balgstruktur (7) zunimmt, wobei der Winkel gegebenenfalls über 90° hinausgeht.

5. System nach Anspruch 3 oder 4, **dadurch gekennzeichnet, dass** die eine Seite einer gleichen Stufe ausbildenden Materialbahnen (7"), die im auseinandergefalteten Zustand der Balgstruktur (7) im Wesentlichen senkrecht zur Ebene des Rahmens (5) ausgerichtet sind, an den Innenecken durch abgerundete Verbindungsteile (8) miteinander verbunden sind, und dass die eine gleiche Seite einer Stufe ausbildenden Materialbahnen (7'), die im auseinandergefalteten Zustand der Balgstruktur (7) im Wesentlichen parallel zur Ebene des Rahmens (5) ausgerichtet sind, an den Innenecken durch Falten (8') miteinander verbunden sind, was die Bildung von Materialreserven im gefalteten Zustand der Balgstruktur (7) ermöglicht.

6. System nach Anspruch 3 oder 4, **dadurch gekennzeichnet, dass** die eine Seite einer gleichen Stufe ausbildenden Materialbahnen (7', 7'') an den Innenecken durch geneigte, abfasende Verbindungsteile (8") miteinander verbunden sind.

7. System nach den Ansprüchen 5 und 6, **dadurch gekennzeichnet, dass** die abgerundeten Verbindungsteile (8) und die Falten (8') im unteren oder mittleren Abschnitt der Balgstruktur (7) vorhanden sind, und dass die Fasenverbindungsteile (8") im oberen Abschnitt oder im äußeren Randbereich der Balgstruktur (7) vorhanden sind und in einer Weise am Rahmen (5) angebracht sind, um an der Außenseite des Vertiefungskörpers Eckfreiräume (9) auszubilden.

8. System nach einem der Ansprüche 1 bis 7, **dadurch gekennzeichnet, dass** der Rahmen (5) jedes Behälters (4) ein metallisches oder nichtmetallisches Gestell (5") umfasst, das mit einem synthetischen oder polymeren Material, beispielsweise einer Membran aus einem thermoplastischen Material, insbesondere aus thermoplastischem Olefin, umspritzt ist, wobei das Material ferner einstückig die Balgstruktur (7) und den Boden (6) des betreffenden Behälters (4) ausbildet.

9. System nach einem der Ansprüche 1 bis 8, **dadurch gekennzeichnet, dass** die Höhe des Rahmens (5) des oder jedes Behälters (4) höchstenfalls identisch mit der Höhe oder Dicke der an den betreffenden Behälter (4) angrenzenden Fliesen (1) ist, vorzugsweise aber kleiner als diese Höhe oder Dicke ist, wobei der Rahmen gegebenenfalls für die Montage einer Abdeckung oder eines ähnlichen Dekorationselements geeignet ist.

10. System nach einem der Ansprüche 1 bis 9, **dadurch gekennzeichnet, dass** der Boden (6) des oder der beladenen Behälter(s) durch das dazugehörige Bauteil (10) in Form einer Schale oder eines Schälchens auf der Auflagefläche (3) aufliegt und in dem der Boden (6) vorzugsweise unter Einpassung und/oder Zusammenwirken von jeweils konjungierten Formen (10'', 11') aufgenommen wird.

11. System nach einem der Ansprüche 1 bis 10, **dadurch gekennzeichnet, dass** der Boden (6) jedes Behälters (4) auf der Innenseite Flüssigkeitsreservoirs ausbildende vertiefte Bereiche (11) und auf der Außenseite hervorstehende Ausbildungen (11') aufweist, die dafür geeignet und dafür vorgesehen sind, sich zumindest teilweise mit den vertieften Komplementärorten (10") des dem betreffenden Behälter (4) zugeordneten Bauteils (10) in Form einer Schale oder eines Schälchens einzupassen.

12. System nach den Ansprüchen 10 und 11, **dadurch gekennzeichnet, dass** die vertieften Bereiche (10") des Bauteils (10) in Form einer Schale oder eines Schälchens gegenüber den Außenabmessungen der hervorstehenden Ausbildungen (11') des Bodens (6) größere Innenabmessungen aufweisen, um zwischen diesen Ausbildungen (11') und diesen wechselseitig eingepassten Orten (10") einen Zwischenraum (12) auszubilden, wobei die Bodenwand (6) auf der Wand des Bauteils (10) auf ebenen Wandabschnitten (16, 16'), die sich zwischen diesen Ausbildungen (11') und diesen Orten (10'') erstrecken, aufliegt.

13. System nach Anspruch 11, **dadurch gekennzeichnet, dass** die vertieften Bereiche (11) und die hervorstehenden Ausbildungen (11') identischen, durch Thermoformung verwirklichten, verformten Zonen der Bodenwand (6) jedes Behälters (4) entsprechen, die zumindest eine Auslassöffnung (13) umfassende Flüssigkeitsreservoirs des Bodens (6) des Behälters (4) ausbilden.

14. System nach einem der Ansprüche 1 bis 13, **dadurch gekennzeichnet, dass** jedes Bauteil (10) in Form einer Schale oder eines Schälchens eine umfangreichere Flächenausdehnung als der Boden (6) des ihm zugeordneten Behälters (4) aufweist, und dass jedes Bauteil (10) eine einwärts gerichtete und gefaltete Außenkante (14) und Flüssigkeitsreservoirs ausbildende Vertiefungen (10") umfasst, die den Standfüße auf der Unterseite ausbildenden hervorstehenden Vorsprüngen (10') entsprechen, von denen zumindest einige die hervorstehenden Ausbildungen (11') des Bodens (6) des ihm zugeordneten Behälters (4) durch Einpassung aufnehmen, wobei die Vertiefungen (10") vorteilhafterweise durch Überlaufkanäle (10"') miteinander verbunden sind.

15. System nach einem der Ansprüche 1 bis 14, **dadurch gekennzeichnet, dass** zumindest der Boden (6) des oder jedes Behälters (4) und/oder das eine Schale oder ein Schälchen ausbildende zugeordnete Bauteil (10) eine Beschichtung umfasst/umfassen, die auf der Innen- oder Außenseite oder an etwaigen Flüssigkeitsauslassöffnungen (13) eine Barriere gegen Wurzelwachstum ausbildet.

16. System nach einem der Ansprüche 1 bis 15, **dadurch gekennzeichnet, dass** jeder Behälter (4) ein Flüssigkeitsverteil- oder -besprengmittel umfasst, das mit einer Leitung oder einem Verteilnetzwerk verbunden ist, das sich unter den Fliesen (1) oder ähnlichem erstreckt.

17. System nach einem der Ansprüche 1 bis 16, **dadurch gekennzeichnet, dass** jeder Behälter (4) auf zumindest zwei gegenüberliegenden Seiten des oberen Rahmens (5) Greif- oder Raststellen umfasst.

18. System nach einem der Ansprüche 1 bis 17, **dadurch gekennzeichnet, dass** der Rahmen (5), der Boden (6) und die Balgstruktur (7) jedes Behälters (4) einstückig oder einteilig ausgebildet sind.

## Claims

1. Modular floor covering system that can be walked on consisting of slabs (1) supported on studs (2), comprising a plurality of covering elements in the form of square or rectangular slabs or similar plates (1) having a specific thickness and a plurality of support elements in the form of studs or the like (2), which are preferably adjustable in height and arranged on a bearing surface (3) to be covered, each slab lying directly, as is common practice, on four studs (2) at its four corners, with the ability to remove each plate or slab (1) individually without involving the support elements (2),
said system also comprising one or more container(s) (4) in the form of tray(s), which are integrated with one or more slab(s) (1), each container having the form of a hollow body which is open at the top and delimits a containment space between the studs (2), the hollow body (4') of each container (4) in the form of a tray comprising on the one hand a rigid frame (5), the peripheral external dimensions of which are essentially the same as or multiples of those of a slab (1) and which rests at least at the corners (5') on the relevant studs (2), and on the other hand a substantially rigid base designed to rest directly or indirectly on the bearing surface (3)
the system being **characterised in that**
the hollow body of each container (4) also comprises an elastically deformable bellows structure (7) connecting the frame (5) to the base (6) and forming the side walls (4') of the hollow body (4), the base (6) preferably having smaller dimensions in the free area (3') of the bearing surface (3) located between the studs (2) supporting the container (4) concerned,
each container (4) in the form of a tray is associated with a separate part (10) in the form of a tray or cup, which rests on the bearing surface (3) between the studs (2) supporting the container (4) concerned and arranged below the base (6) of said container (4) and
**in that** each part (10) in the form of a tray or cup has projections (10') underneath, preferably formed by local deformations of the wall of said part (10), which are designed to rest said part (10) in the form a tray or cup in a discontinuous manner, preferably with local spaced apart bearing areas, on the bearing surface (3).

2. System according to claim 1, **characterised in that** the base (6) of each container has a square or rectangular form with a smaller dimension than the frame (5) and **in that** the lateral walls (4') forming the deformable bellows structure (7) converge by tapering towards said base (6).

3. System according to any of claims 1 and 2, **characterised in that** the bellows structure (7) is formed by bands of material (7', 7") connected to one another by the film hinges (7"') and forms a one piece part with the base (6) with a hollow body (4') corresponding to an inverse tiered pyramid, which is hollow and open at the bottom, obtained for example by injection moulding or by thermoforming thermoplastic materials.

4. System according to claim 3, **characterised in that** in a suspended state of equilibrium of the bellows structure (7) and in the absence of any restriction, the angle (α) between two adjacent bands of material (7', 7") connected by a film hinge (7'''), at the base of the tier and from the inner side of the hollow body (4'), is less than 90°, said angle (α) decreasing after folding or flattening the bellows structure (7) and increasing after extending or elongating said bellows structure (7), possibly beyond 90°.

5. System according to claim 3 or 4, **characterised in that** the bands of material (7") forming a surface of the same tier, oriented substantially perpendicular to the plane of the frame (5) in the expanded state of the bellows structure (7), are connected to one another at their internal corners by rounded connecting portions (8) and **in that** the bands of material (7') forming the same face of a tier, oriented substantially parallel to the plane of the frame (5) in the expanded state of the bellows structure (7) are connected to one another at their internal corners by folds (8'), allowing the formation of reserves of material in the folded state of the bellows structure (7).

6. System according to claim 3 or 4, **characterised in that** the bands of material (7', 7") forming the same surface of a tier are connected to one another at their internal corners, by inclined connecting portions (8") forming bevels.

7. System according to claims 5 and 6, **characterised in that** the rounded connecting portions (8) and the folds (8') are provided in the lower or central part of the bellows structure (7) and **in that** the bevelled connecting portions (8") are provided in the upper part in the peripheral external area of the bellows structure (7), adjoining the frame (5) so as to form clearances (9) in the corners on the outer side of the hollow body.

8. System according to any of claims 1 to 7, **characterised in that** the frame (5) of each container (4) comprises an armature (5"), which is made of metal or not made of metal, moulded by a synthetic or polymer material, such as for example a membrane made of thermoplastic material, in particular thermoplastic olefin, said material also forming in one piece the bellows structure (7) and the base (6) of the container (4) concerned.

9. System according to any of claims 1 to 8, **characterised in that** the height of the frame (5) or of each container (4) is at most the same as the height or thickness of neighbouring slabs (1) of the container (4) concerned, preferably smaller than said height or thickness, said frame being possibly adjusted for the installation of a cover or similar decorative element.

10. System according to any of claims 1 to 9, **characterised in that** the base (6) of the charged container(s) rests on the bearing surface (3) through the part (10) in the form of a tray or cup which is associated therewith and in which it is received preferably by interlocking and/or cooperation of the respectively connected forms (10", 11')

11. System according to any of claims 1 to 10, **characterised in that** the base (6) of each container (4) has on the inner side, recessed areas (11) which form reservoirs of liquid, and on the outer side, protruding shapings (11'), which are able and designed to nest at least partially with complementary recessed sites (10") of the part (10) in the form of a tray or cup associated with the container (4) concerned.

12. System according to claims 10 and 11, **characterised in that** the recessed sites (10") of the part (10) in the form of a tray or cup have internal dimensions greater than the external dimensions of the protruding shapings (11') of the base (6), so as to form a gap (12) between said shapings (11') and said mutually interconnected sites (10"), the wall of the base (6) resting on the wall of the part (10) on portions of planar walls (16, 16') extending between said shapings (11') and said sites (10").

13. System according to claim 11, **characterised in that** the recessed areas (11) and the protruding shapings (11') correspond to identical shaped areas of the wall of the base (6) of each container (4) formed by thermoforming, said recessed areas (11) forming reservoirs of liquid at the base (6) of the container (4) each comprising at least one evacuation opening (13).

14. System according to any of claims 1 to 13, **characterised in that** each part (10) in the form of a tray or cup has a greater surface area than the base (6) of the container (4) with which it is associated and comprises a peripheral edge (14) which is raised and folded towards the inside and recesses (10") forming reservoirs of liquid, which correspond with protruding projections (10') below the surface forming bases, at least some of which receive by interconnection the protruding shapings (11') of the base (6) of the associated container (4), said recesses (10") being preferably connected by overflow spill channels (10"').

15. System according to any of claims 1 to 14, **characterised in that** at least the base (6) of or of each container (4) and/or the part forming an associated tray or cup (10) comprise(s) a covering which forms a barrier to the advancement of roots on the inner or exterior face or at possible openings (13) for evacuating liquid.

16. System according to any of claims 1 to 15, **characterised in that** each container (4) comprises a means for diffusing or spraying liquid, connected to a conduit or distribution network extending underneath the slabs (1) or the like.

17. System according to any of claims 1 to 16, **characterised in that** each container (4) comprises gripping or attachment points on at least two opposite sides of the upper frame (5).

18. System according to any of claims 1 to 17, **characterised in that** the frame (5), the base (6) and the bellows structure (7) of each container (4) are made in one piece or form a monobloc unit.
